# EUROPÄISCHE PATENTSCHRIFT

(11) **EP 3 079 453 B1**
(45) Veröffentlichungstag und Bekanntmachung des Hinweises auf die Patenterteilung: **26.02.2020**
(21) Anmeldenummer: 15820155.8
(22) Anmeldetag: 22.12.2015
(51) Int. Cl.: A01B 23/02

(54) **WERKZEUGSYSTEM**
TOOL SYSTEM
SYSTÈME D'OUTILS

(30) Priorität: 22.12.2014 DE 102014119359
(43) Veröffentlichungstag der Anmeldung: 19.10.2016
(73) Patentinhaber: Betek GmbH & Co. KG, 78733 Aichhalden (DE)
(72) Erfinder: SMEETS, Florian, 72270 Baiersbronn (DE); KRÄMER, Ulrich, 77709 Wolfach (DE); SEIFRIED, Fabian, 78662 Herrenzimmern (DE)
(74) Vertreter: Herrmann, Jochen
(86) Internationale Anmeldenummer: PCT/EP2015/081047
(87) Internationale Veröffentlichungsnummer: WO 2016/102600

(56) Entgegenhaltungen:
- EP-A1- 1 723 840
- DE-A1-102013 102 420
- DE-A1-102013 104 836

## Beschreibung

Die Erfindung betrifft ein Werkzeugsystem für eine landwirtschaftliche Bodenbearbeitungsmaschine mit einem Basisteil, das mittels einer lösbaren Verbindung mit einem Trägerelement, insbesondere mit einem Zinken der landwirtschaftlichen Bodenbearbeitungsmaschine, in Verbindung steht, wobei das Basisteil eine Schneide und angrenzend an die Schneide wenigstens ein Hartstoffelement aufweist, und wobei das Trägerelement in seinem in Arbeitsrichtung weisenden Endbereich seitlich angeordnete, mit Hartmetallplatten bestückte Flügelscharen aufweist.

Die Erfindung betrifft weiterhin eine Flügelschar eines solchen Werkzeugsystems.

Aus der DE 10 2013 102 420 A1 ist eine Werkzeugkombination für eine landwirtschaftliche Bodenbearbeitungsmaschine mit einer Scharspitze und einem an der Scharspitze angeschlossenen Leitelement bekannt. Die Scharspitze und das Leitelement sind an einem Trägerelement einer landwirtschaftlichen Maschine mittels einer Schraubenbefestigung befestigt. Ein Basisteil der Scharspitze weist eine Schneide und angrenzend an die Schneide wenigstens ein Hartmetallelement auf. In das Basisteil ist weiterhin gegenüberliegend zur Schneide eine Aufnahme eingearbeitet, die in Werkzeugvorschubrichtung mittels eines Deckabschnitts überdeckt ist. In diese Aufnahme kann ein Steckansatz des Leitelements eingeführt und darin festgelegt werden. Der Deckabschnitt an der Aufnahme des Basisteils schützt das Leitelement und die Schraubenbefestigung der Werkzeugkombination zusätzlich vor abrasiven Verschleiß durch das von der Scharspitze abgetragene Bodenmaterial.

Die Werkzeugkombination weist an dem Trägerelement seitlich angeordnete Flügelschare auf. Die in Werkzeugvorschubrichtung weisenden Kantenbereiche der Flügelschare sind mit Schneidelementen ausgerüstet.

Nachteilig bei dieser Werkzeugkombination ist, dass die in Werkzeugvorschubrichtung weisenden Kantenbereiche der Flügelscharen insbesondere in ihren trägernahen Bereichen einem relativ hohen Verschleiß ausgesetzt sind. Dies gilt insbesondere für die Übergangsbereiche von den Flügelscharen zu dem Trägerelement.

Es ist Aufgabe der Erfindung, ein Werkzeugsystem mit einer an einem Trägerelement angeordneten Scharspitze mit einem Basisteil als Grundkörper und seitlich an dem Trägerelement montierten Flügelscharen mit einem verbesserten und zwischen den Bauteilen des Werkzeugsystems aufeinander abgestimmtem Verschleißverhalten bereitzustellen.

Es ist weiterhin Aufgabe der Erfindung, eine entsprechende Flügelschar bereitzustellen.

Die das Werkzeugsystem betreffende Aufgabe der Erfindung wird dadurch gelöst, dass die mit Hartmetallplatten bestückte Kante der Flügelschar bis an eine Seitenoberfläche des Trägerelementes geführt ist.

Die Kante der Flügelschar ist durch diese Maßnahme vorzugsweise von ihrem äußeren Ende bis hin zu ihrem inneren Abschluss an dem Trägerelement durchgängig von Hartmetallplatten gebildet. Dadurch ist die Kante auch in dem Übergangsbereich von der Flügelschar zu dem Trägerelement verschleißfest ausgeführt. Ein verstärkter abrasiver Verschleiß im inneren Abschnitt der Kante kann so vermieden werden. Dadurch kann die Standfestigkeit der Flügelschar an die des Basisteils angepasst werden. Bei gleicher oder ähnlicher Standfestigkeit der Flügelschar und des Basisteils können diese in gleichen Wechselintervallen getauscht werden. Dadurch können der Wartungsaufwand sowie die Stillstandzeiten der landwirtschaftlichen Bodenbearbeitungsmaschine reduziert werden.

Die das Werkzeugsystem betreffende Aufgabe der Erfindung wird weiterhin dadurch gelöst, dass das wenigstens eine an die Schneide angrenzende Hartstoffelement die im trägernahen Bereich angeordneten Hartmetallplatten der Flügelschar quer zur Arbeitsrichtung wenigstens teilweise überdeckt. Entlang der Arbeitsrichtung und somit in Fließrichtung des vorbeigleitenden Erdreichs wird in dieser Anordnung die Kante der Flügelschar im Übergangsbereich zu dem Trägerelement durch das davorliegende Hartstoffelement abgeschirmt. Dabei ist das Hartstoffelement so ausgeführt, dass es die Kante zumindest bis zur innersten Hartmetallplatte abschirmt. Die Kante der Flügelschar ist so in ihrem dem Trägerelement zugewandten Bereich, der gegebenenfalls nicht mehr von den Hartmetallplatten der Flügelschar bedeckt ist, durch das Hartstoffelement vor starker Einwirkung durch das vorbeigleitende Erdreich und somit vor hoher mechanischer Belastung geschützt angeordnet. Dadurch kann in diesem ansonsten stark belasteten Abschnitt der Verschleiß deutlich gesenkt werden. Auch durch diese Maßnahme kann die Standzeit der Flügelschar an die Standzeit der Scharspitze und der weiteren Bauteile des Werkzeugsystems mit den zuvor beschriebenen Vorteilen angepasst werden.

Vorteilhaft kann es vorgesehen sein, dass ein Anstellwinkel der Flügelschar in einem vorgegebenen Bereich in Stufen oder stufenlos gegenüber dem Trägerelement einstellbar ist und dass das wenigstens eine an die Schneide angrenzende Hartstoffelement in allen einstellbaren Anstellwinkeln der Flügelschar die im trägernahen Bereich angeordneten Hartmetallplatten der Flügelschar quer zur Arbeitsrichtung zumindest teilweise überdeckt. Durch die Einstellung des Anstellwinkels der beidseitig des Trägerelements angeordneten Flügelscharen kann das Werkzeugsystem an die jeweiligen Arbeitsbedingungen angepasst werden. Durch die zumindest teilweise Überdeckung der an das Trägerelement angrenzenden Hartmetallplatten durch das jeweilige Hartstoffelement in allen einstellbaren Anstellwinkeln kann der Verschleiß in dem dem Trägerelement zugewandten Bereichen der Flügelscharen gering gehalten werden. Dies ist insbesondere bei steilen Anstellwinkeln, bei denen die Flügelscharen eine große Angriffsfläche bieten, vorteilhaft.

Das Hartstoffelement schließt an die vorzugsweise ebenfalls aus Hartstoff hergestellte Schneide des Basisteils der Scharspitze an. Eine Überdeckung der Kante der jeweiligen Flügelschar im trägernahen Bereich entlang der Arbeitsrichtung durch das Hartstoffelement kann dadurch sichergestellt werden, dass ein Abstand zwischen der mit Hartmetallplatten bestückten Kante der Flügelschar und einer Grundfläche des zu bearbeitenden Grundes im Vergleich zu einem Abstand zwischen einem in Fließrichtung des Bodenmaterials liegenden Endpunkt des wenigstens einen Hartstoffelementes und der Grundfläche kleiner ist. Das Hartstoffelement erstreckt sich von der Schneide bis zu seinem Endpunkt in einer von der Grundfläche aus gemessenen Höhe, welche über der Höhe der Kante der jeweiligen Flügelschar liegt. Der trägernahe Kantenbereich ist somit von dem Hartstoffelement gegenüber vorbeigleitendem Erdreich abgeschirmt. Dies gilt vorteilhaft für alle möglichen Anstellwinkel der Flügelscharen.

Eine zumindest teilweise Abschirmung der Flügelschar in ihrem dem Trägerelement zugewandten Bereich kann dadurch sichergestellt werden, dass die Länge des an der Schneide angrenzenden, wenigstens einen Hartstoffelements in Fließrichtung des Bodenmaterials einer horizontalen Lage der mit Hartstoffplatten bestückten Flügelschar angepasst ist. Die Anpassung kann dabei beispielsweise für unterschiedliche Montagehöhen verschiedener Flügelscharen, welche an dem Werkzeugsystem einsetzbar sind, oder für mögliche Anstellwinkel der Flügelscharen erfolgen.

Die Anpassung der Lage der Abschirmung durch das Hartstoffelement kann dadurch ermöglicht werden, dass das an der Schneide angrenzende Hartstoffelement einteilig oder mehrteilig ausgebildet ist. Ein einteiliges Hartstoffelement kann kostengünstig hergestellt und mit dem Basisteil verbunden werden. Es kann den auf die Grundfläche bezogenen Höhenunterschied zwischen dem oberen Abschluss der Schneide und dem erforderlichen Endpunkt, der oberhalb der Höhe der Kante der Flügelschar liegt, in einem gewissen Bereich überbrücken. Muss von dem Hartstoffelement aufgrund der Anordnung der Schneide der Scharspitze und der Kante der Flügelschar ein größerer Höhenunterschied überbrückt werden, so kann es vorteilhaft, insbesondere kostengünstiger, sein mehrere Hartstoffelemente aneinanderzureihen, bis die erforderliche Höhe des Endpunktes gegenüber der Grundfläche erreicht ist. Ein mehrteilig ausgebildetes Hartstoffelement kann auch dann sinnvoll sein, wenn das Basisteil der Scharspitze im Bereich des Hartstoffelements zur besseren Führung des vorbeigleitenden Grundes leicht, insbesondere konkav, gewölbt ist. Das Hartstoffelement kann einer solchen Formgebung bei zwei- oder mehrteiligem Aufbau aus eben hergestellten Segmenten, welche in einem Winkel zueinander ausgerichtet sind, mit ausreichender Genauigkeit folgen.

Die Herstellkosten für das Werkzeugsystem können weiterhin dadurch reduziert werden, dass das Hartstoffelement einteilig mit einem die Schneide bildenden Schneidelement verbunden ist. Vorteilhaft werden hierbei Stoßstellen zwischen der Schneide und dem Hartstoffelement, welche Angriffspunkte für vorbeigleitendes Erdreich bilden und somit einem erhöhten Verschleiß unterliegen, vermieden.

Entsprechend einer weiteren bevorzugten Ausgestaltungsvariante der Erfindung kann es vorgesehen sein, dass der Abstand der im trägernahen Bereich angeordneten Hartmetallplatte der Flügelschar zu einer Ebene, welche eine der Flügelschar zugewandte Seitenoberfläche des Trägerelementes enthält, kleiner ist als der Abstand der quer zur Arbeitsrichtung äußeren Abmessungsbegrenzung des Hartstoffelementes zu der Ebene. Das Hartstoffelement steht somit quer zur Vorschub- und damit Arbeitsrichtung bis zur innersten Hartmetallplatte der Flügelschar über und deckt diese teilweise ab. Der Bereich zwischen der innersten Hartmetallplatte und dem Trägerelement ist dadurch von dem Hartstoffelement abgeschirmt. Auf diese Weise kann der Verschleiß der Flügelschar in ihren trägernahen Bereich deutlich reduziert werden, auch wenn die Hartmetallplatten nicht vollständig bis an das Trägerelement herangeführt sind.

Der größte Verschleiß der Flügelscharen erfolgt an ihren in Arbeitsrichtung weisenden Kanten, weshalb diese mit den Hartstoffplatten belegt sind. Die Angriffsfläche, welche die Hartstoffplatten dem vorbeigleitenden Erdreich bietet, ist letztendlich durch deren Projektion entgegengesetzt zur Arbeitsrichtung gegeben. Um diese Angriffsfläche auch im trägernahen Bereich durch das in Arbeitsrichtung vorgelagerte Hartstoffelement vollständig abzuschirmen kann es vorgesehen sein, dass die Projektion des Hartstoffelementes entgegengesetzt zur Arbeitsrichtung in eine die Kante enthaltende Ebene eine größere Länge senkrecht zur Arbeitsrichtung aufweist als die Erstreckung der Hartstoffplatten in dieser Richtung. Dadurch ist sichergestellt, dass die Kante der Flügelschar in ihrem Anschlussbereich an das Trägerelement über eine gleiche vertikale Ausdehnung durch das Hartstoffelement geschützt ist wie benachbart durch die Hartmetallplatten, welche entlang der Kante der Flügelschar angeordnet sind.

Eine ausreichende Abschirmung des trägernahen Bereiches der Flügelschar durch das in Arbeitsrichtung vorgelagerte Hartstoffelement kann auch dadurch sichergestellt werden, dass die Projektion der äußeren Abmessungsbegrenzung des Hartstoffelementes entgegengesetzt zur Arbeitsrichtung in eine die Kante enthaltende Ebene eine größere Länge aufweist als die Erstreckung der Hartstoffplatten in diese Richtung.

Ein guter Eingriff des Werkzeugsystems in das Erdreich kann dadurch erreicht werden, dass die Schneide gestuft ausgeführt ist, wobei der mittlere Bereich der Schneide gegenüber dem äußeren Bereich der Schneide hervorsteht. Durch den stufigen Eingriff wird die Zugkraft, welche benötigt wird, um die Scharspitze mit den Flügelscharen durch das Erdreich zu ziehen, reduziert. Dadurch kann der Energieverbrauch der landwirtschaftlichen Bodenbearbeitungsmaschine reduziert werden.

Der Verschleiß der Kanten der Flügelscharen kann weiterhin dadurch reduziert werden, dass zwischen benachbarten Hartmetallplatten ausgebildete Stoßkanten schräg zu einer vertikal zur Grundfläche und in Arbeitsrichtung verlaufenden Fläche ausgerichtet sind. Durch die winklig angestellten Hartmetallplatten wird erreicht, dass der Materialfluss des abgetragenen Erdreichs schräg zu den zwischen den Hartmetallplatten ausgebildeten Stoßstellen verläuft. Dies führt entlang der Stoßkanten zu einem reduzierten Verschleiß.

Entsprechend einer möglichen Ausführungsvariante der Erfindung kann es vorgesehen sein, dass zwei gegenüberliegend an dem Trägerelement angeordnete Flügelscharen einstückig miteinander verbunden sind. Die Flügelscharen können so in einem Arbeitsschritt und optimal zueinander und zu dem vorgelagerten Basisteil der Scharspitze mit den daran angebrachten Hartstoffelementen ausgerichtet mit dem Trägerelement verbunden werden.

Zur Befestigung der Flügelscharen an das Trägerelement weisen diese bevorzugt jeweils eine Befestigungslasche auf. Die Befestigungslasche ist dabei in einem Winkel zu einer Grundplatte der Flügelschar, welche die Hartmetallplatten trägt, ausgerichtet und beispielsweise einstückig mit dieser verbunden. An der Befestigungslasche sie Befestigungsaufnahmen zur Montage der Flügelschar an dem Trägerelement vorgesehen. Montiert liegt die Befestigungslasche flächig an einer Seitenfläche des Trägerelementes an und ist über geeignete Befestigungselemente mit diesem verbunden. Um einen erhöhten Verschleiß der Befestigungslasche durch vorbeigleitendes Erdreich zu vermeiden kann es vorgesehen sein, dass das Basisteil die Befestigungslasche der Flügelschar und/oder Befestigungselemente der Flügelschar zur Befestigung der Befestigungslasche an dem Trägerelement quer zur Arbeitsrichtung wenigstens teilweise überdeckt. Durch diese Anordnung schirmt das Basisteil die vordere Stirnseite der Befestigungslasche sowie deren von dem Trägerelement abgewandte Seitenfläche gegenüber dem Materialfluss des Erdreiches ab. Dadurch kann die Standzeit der Flügelschar deutlich verlängert werden. Durch die Abschirmung der Befestigungselemente, beispielsweise von Schrauben und Muttern, mit welchen die Befestigungslasche an das Trägerelement angeschraubt ist, kann auch deren Verschleiß reduziert werden. Dadurch kann vermieden werden, dass sich die Flügelschar durch Verschleiß der Befestigungselemente von dem Trägerelement löst und verloren geht. Ebenfalls bleiben Werkzeugeinsätze bzw. Werkzeugansätze der Befestigungselemente erhalten, sodass die Befestigungselemente auch nach langem Einsatz problemlos geöffnet werden können.

Die die Flügelschar betreffende Aufgabe der Erfindung wird dadurch gelöst, dass die Kante bis in den Bereich der Befestigungslasche und/oder bis in den Bereich einer zwischen der Befestigungslasche und der Grundplatte gebildeten Übergangskontur geführt ist. Die Kante ist durch Hartmetallplatten gebildet und dadurch verschleißfest ausgeführt. Dadurch, dass die Kante bis in den Bereich der Befestigungslasche oder zumindest der Übergangskontur geführt ist, ist auch der dem Trägerelement zugewandte Abschnitt der Flügelschar vor Verschleiß geschützt. Die Standzeit der Flügelschar kann dadurch verlängert werden.

Der Anstellwinkel der Flügelschar kann dadurch eingestellt werden, dass die Befestigungslasche Montageelemente und/oder Montageaufnahmen zur Befestigung der Flügelschar an einem Trägerelement des landwirtschaftlichen Bodenbearbeitungswerkzeugs aufweist und dass die Montageelemente und/oder die Montageaufnahmen derart ausgelegt sind, dass die Flügelschar in unterschiedlichen Anstellwinkeln mit dem Trägerelement verbindbar ist.

Die Erfindung wird im Folgenden anhand eines in den Zeichnungen dargestellten Ausführungsbeispiels näher erläutert.

Es zeigen:
- Fig. 1: die Darstellung eines Werkzeugsystems in Frontansicht mit einem Basisteil, einem Leitelement und zwei seitlich angeordneten Flügelscharen;
- Fig. 2: das Werkzeugsystem gemäß Fig. 1 in Seitenansicht;
- Fig. 3: die Darstellung einer weitere Ausführungsform eines Werkzeugsystems in einer perspektivischen Darstellung;
- Fig. 4: die Darstellung einer erfindungsgemäßen Flügelschar in einer perspektivischen Darstellung;
- Fig. 5: die Darstellung einer weiteren erfindungsgemäßen Flügelschar mit einstellbarem Anstellwinkel in einer perspektivischen Darstellung;
- Fig. 6: die Darstellung einer Flügelschar mit Führungsstegen in einer perspektivischen Ansicht;
- Fig. 7: die Darstellung einer Flügelschar mit einer inneren Anschlagslasche in einer perspektivischen Ansicht;
- Fig. 8: die Darstellung einer Flügelschar mit einer äußeren Anschlagslasche in einer perspektivischen Ansicht;
- Fig. 9: die Darstellung eines Werkzeugsystems mit den in Figur 7 und 8 gezeigten Flügelscharen in einer seitlichen Ansicht und
- Fig. 10: zwei einteilig miteinander verbundene Flügelscharen in einer Ansicht von vorne.

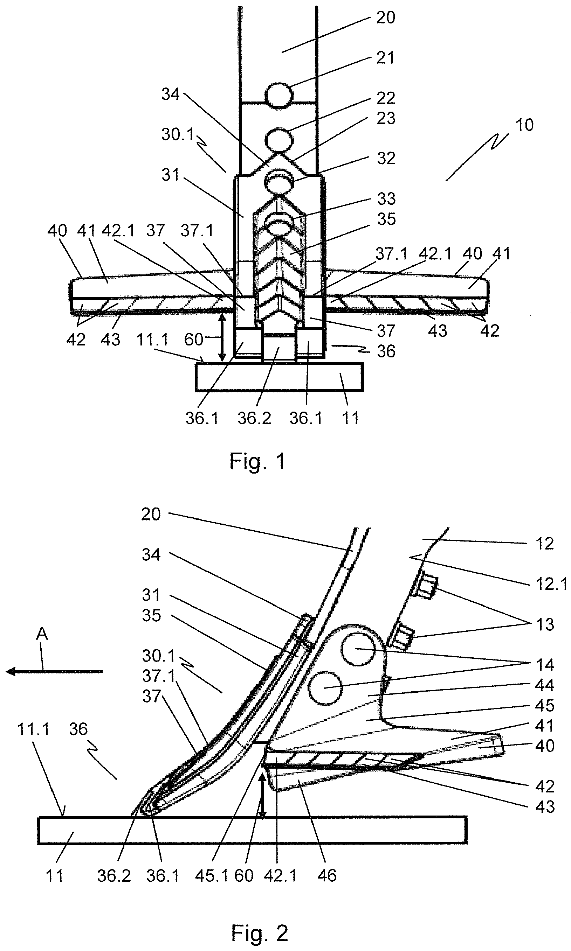

Fig. 1 zeigt ein erfindungsgemäßes Werkzeugsystem 10 in Frontansicht mit einem Basisteil 31, einem Leitelement 20 und zwei seitlich angeordneten Flügelscharen 40. Die Flügelscharen 40 sind spiegelsymmetrisch aufgebaut und werden nachfolgend gemeinsam beschrieben.

Das Basisteil 2 weist an seinem in Arbeitsrichtung A weisenden Ende eine Schneide 36 auf. Die Arbeitsrichtung A ist dabei in Figur 2 durch einen Pfeil gekennzeichnet. Die Schneide 36 ist aus drei nebeneinander angeordneten Schneidelementen 36.1, 36.2 gebildet. Dabei sind die beiden äußeren Schneidelemente 36.1 gegenüber dem mittleren Schneidelement 36.2 zurückgesetzt. Durch diese Anordnung ist eine stufige verlaufende Schneide 36 gebildet. Die Schneidelemente 36.1, 36.2 sind aus einem Hartstoffmaterial, vorzugsweise aus Hartmetall, gebildet. Sie weisen einen flächenförmigen Befestigungsabschnitt und ein daran angeformtes, entgegen der Arbeitsrichtung abstehendes Ansatzstück auf. Die Schneidelemente 36.1, 36.2 sind somit als winkelförmige Hartstoffbauteile ausgebildet. Im Bereich des Ansatzstückes wird die Schneidkante gebildet. Die Schneidelemente 36.1, 36.2 sind an dem Basisteil 31 derart befestigt, dass die freie Endkante des Basisteils 31 von den Ansatzstücken der Schneidelemente 36.1, 36.2 zumindest teilweise umgriffen wird. Auf diese Weise wird das freie Ende des Basisteils verschleißgeschützt. Die Schneidelemente 36.1, 36.2 sind vorzugsweise stoffschlüssig, insbesondere durch Löten, mit dem Basisteil 31 verbunden. Dabei ist durch die winkelförmige Ausgestaltung der Schneidelemente 36.1, 36.2 eine zusätzlich wirkende Formschlussverbindung vorgesehen.

Im Anschluss an die äußeren Schneidelemente 36.1 und entlang der Außenkanten des Basisteils 31 ist jeweils ein Hartstoffelement 37 angeordnet. Die Hartstoffelemente 37 sind im vorliegenden Ausführungsbeispiel jeweils einteilig ausgeführt. Es ist jedoch auch denkbar, ein mehrteiliges Hartstoffelement 37 vorzusehen. Gegenüberliegend zu seinem Anschluss an das äußere Schneidelement 36.1 schließt das jeweilige Hartstoffelement 37 an einem Endpunkt 37.1 ab. Die Hartstoffelemente 37 sind stoffschlüssig, insbesondere durch Löten, mit dem Basisteil 31 verbunden.

In seinem Mittenbereich sind V-förmig ausgebildete und stufenförmig ineinander übergehende Ableitflächen 35 in das Basisteil 31 eingeformt. Gegenüberliegend zu der Schneide 36 endet das Basisteil 31 in einer Überdeckung 34. Die Überdeckung 34 ist als V-förmiger Ansatz ausgebildet und überdeckt das dem Basisteil 31 zugewandte Ende des Leitelements 20. In das Basisteil 31 sind weiterhin Ausnehmungen 32, 33 eingebracht. Diese dienen der Aufnahme von Befestigungselementen, mit welchen das Basisteil 31 an ein in Figur 2 gezeigtes Trägerelement 12 montiert werden kann.

Das Basisteil 31, die Schneidelemente 36.1, 36.2 und die Hartstoffelemente 37 bilden zusammen eine Scharspitze 30.1.

Das Leitelement 20 weist zwei Bohrungen 21, 22 auf. Die Bohrungen 21, 22 diene der Aufnahme von Montageschrauben zur Befestigung des Leitelements 20 an dem in Figur 2 gezeigten Trägerelement 12. Zusätzlich ist das Leitelement 20 mit seinem der Scharspitze 30.1 zugewandten Ende unter die Überdeckung 34 des Basisteils 31 geführt. Nicht dargestellt kann das Leitelement 20 in seinem weiteren, dem Basisteil 31 abgewandten Verlauf um seine Mittellängsachse gedreht ausgeführt sein. Dadurch wird das abgetragene Erdreich zur Seite hin abgelenkt.

Die Flügelscharen 40 sind seitlich abstehend und in Arbeitsrichtung A der Scharspitze 30.1 nachfolgend mit dem in Figur 2 gezeigten Trägerelement 12 verbunden. Sie weisen jeweils eine Grundplatte 41 auf. Die Grundplatten 41 sind gegenüber einer Grundfläche 11.1 eines zu bearbeitenden Grundes 11 in einem Anstellwinkel ausgerichtet. Dabei ist der Anstellwinkel derart gewählt, dass sich die Distanz zwischen der Grundfläche 11.1 und der Grundplatte 41 mit steigendem Abstand von der Scharspitze 40.1 vergrößert. An ihrem in Arbeitsrichtung A vorderen Ende sind die Grundplatten 41 mit Hartmetallplatten 42 mit einer dem Trägerelement 12 zugewandten, trägernahen Hartmetallplatte 42.1 belegt. Die Hartmetallplatten 42, 42.1 bilden mit ihrem vorderen Abschluss jeweils eine Kante 43 der Flügelscharen 40 aus. Die Kante 43 weist einen Abstand 60 zu der Grundfläche 11.1 auf. Die Stoßstellen der aneinandergrenzenden Hartmetallplatten 42, 42.1 sind gegenüber der Arbeitsrichtung A schräg angeordnet.

Die Hartmetallplatten 42, 42.1 sind vorzugsweise stoffschlüssig, insbesondere durch Löten, mit der Grundplatte 41 verbunden. Zusätzlich können die Hartmetallplatten 42, 42.1 Formschlusselement aufweisen, mit denen eine zusätzliche Kopplung zu der Grundplatte 41 erfolgt.

Im Einsatz wird das Werkzeugsystem 10 von einer nicht dargestellten landwirtschaftlichen Bodenbearbeitungsmaschine entlang der in Figur 2 gezeigten Arbeitsrichtung A bewegt. Dabei greifen die Scharspitze 30.1 und die Flügelscharen 40 in den zu bearbeitenden Grund 11 ein und pflügen diesen um. Die dabei mechanisch besonders stark belasteten Bereiche der Schneide 36 der Scharspitze 30.1 sowie der Kanten 43 der Flügelscharen 40 sind durch die aus Hartwerkstoff hergestellten Schneidelemente 36.1, 36.2 sowie durch die Hartmetallplatten 42, 42.1 vor zu hohem Verschleiß geschützt. Die den äußeren Schneidelementen 36.1 nachgeordneten seitlichen Randbereiche des Basisteils 31 sind durch die Hartstoffelemente 37 geschützt. Erfindungsgemäß sind die Hartstoffelemente 37 derart angeordnet, dass sie in ihrer der Arbeitsrichtung A entgegengesetzten Projektion, wie diese durch die in Figur 1 gezeigte Frontansicht dargestellt ist, zumindest einen Teil der trägernahen Hartmetallplatten 42.1 überdecken. Dazu ist ein Abstand zwischen der Grundfläche 11.1 und dem Endpunkt 37.1 des jeweiligen Hartstoffelements 37 größer gewählt als ein Abstand 60 zwischen den Kanten 43 der Flügelscharen 40 und der Grundfläche 11.1. Weiterhin sind die trägernahen Hartmetallplatten 42.1 mit ihrem inneren Abschluss so dicht an das Trägerelement 12 herangeführt, dass die Projektion der Hartstoffelemente 37 die jeweiligen trägernahen Hartmetallplatten 42.1 zumindest teilweise überdeckt. Vorzugsweise ist die Projektion der Hartstoffelemente 37 in vertikaler Richtung länger als die Projektion der Hartmetallplatten 42, 42.1 in gleicher Richtung. Dabei ist vorteilhaft der Abstand des Endpunktes 37.1 zu der Grundfläche 11.1 gleich oder größer als der Abstand des der Kante 43 gegenüberliegenden Endes der Hartmetallplatten 42, 42.1 zu der Grundfläche 11.1. Durch die beschriebene Anordnung ist der Übergangsbereich zwischen der trägernahen Hartstoffplatte 42.1 und dem in Figur 2 gezeigten Trägerelement 12 durch das jeweils in Arbeitsrichtung A vorgelagerte Hartstoffelement 37 abgeschirmt. Abgetragenes Erdreich wird durch die Hartstoffelemente 37 an dem jeweiligen Übergangsbereich vorbeigeleitet. Dadurch kann der Verschleiß der Werkzeugkombination 10 insbesondere in den dem Trägerelement 12 zugewandten Bereichen der Flügelscharen 40 deutlich reduziert werden. Für die Flügelscharen 40 kann so eine vergleichbare Standzeit wie für die Scharspitze 30.1 erreicht werden.

Figur 2 zeigt das Werkzeugsystem 10 gemäß Figur 1 in Seitenansicht. Gleiche zu Figur 1 eingeführte Bezeichner sind dabei beibehalten.

Das Basisteil 31 der Scharspitze 30.1 sowie das Leitelement 20 sind entlang einer in Arbeitsrichtung A weisenden Anlagefläche des Trägerelementes 12 montiert. Das Leitelement 20 ist dazu durch in die Bohrungen 21, 22 (siehe Figur 1) eingeführte Schrauben und zugehörige Befestigungsmuttern 13 an dem Trägerelement 12 befestigt. Entsprechend ist auch die Scharspitze 30.1 an dem Trägerelement 12 angeschraubt. Das Leitelement 20 und das Basisteil 31 sind derart angeordnet, dass das dem Basisteil 31 zugewandte Ende des Leitelementes 20 in Arbeitsrichtung A von der Überdeckung 34 des Basisteils 31 abgedeckt ist. Das Ende des Leitelements 20 ist so in seiner Position gehalten und vor abrasiven Verschleiß durch vorbeigleitendes Erdreich geschützt.

Die Grundplatte 41 der Flügelschar 40 ist über eine Übergangskontur 45 mit einer Befestigungslasche 44 verbunden. Die Befestigungslasche 44 ist winklig, vorzugsweise rechtwinklig, gegenüber der Grundplatte 41 ausgerichtet. Sie liegt mit ihrer dem Trägerelement 12 zugewandten Seite an einer Seitenoberfläche 12.1 des Trägerelements 12 flächig an. Die Befestigungslasche 44 weist einen sich mit steigendem Abstand von der Grundplatte 41 verjüngenden Querschnitt auf und ist an ihrem der Grundplatte 41 abgewandten Ende abgerundet. Die Kontur der Befestigungslasche 44 ist derart ausgelegt, dass ihre in Arbeitsrichtung A weisende Stirnfläche gering beabstandet zu dem Basisteil 31 verläuft. Die Befestigungslasche 44 ist mittels Befestigungselementen 14, vorzugsweise Schrauben, mit dem Trägerelement 12 verbunden. An der dem Trägerelement 12 zugewandten Seite der Grundplatte 41 und gegenüberliegend zu der Befestigungslasche 44 ist ein Führungsabschnitt 46 mit der Grundplatte 41 verbunden. Der Führungsabschnitt 46 dient der seitlichen Führung des Werkzeugsystems 10 im landwirtschaftlichen Einsatz.

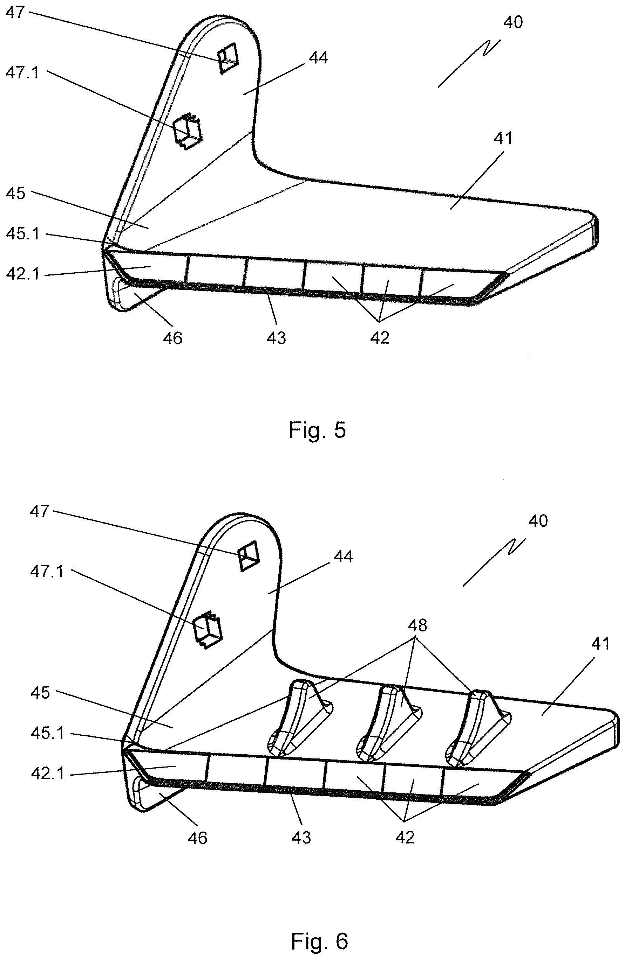

Die Übergangskontur 45 zwischen der Grundplatte 41 und der Befestigungslasche 44 ist kehlförmig ausgeführt. Dabei vergrößert sich in dem gezeigten Ausführungsbeispiel der Radius der gebildeten Kehle, ausgehend von seinem den Hartmetallplatten 42, 42.1 zugewandten Bereich, zum hinteren Ende der Grundplatte 41 und der Befestigungslasche 44 hin. In die Übergangskontur 45 ist an ihrem in Arbeitsrichtung A weisenden Ende eine Plattenaufnahme 45.1 eingeformt, wie dies näher in den Figuren 5 bis 9 gezeigt ist. Die trägernahe Hartmetallplatte 42.1 ist zumindest abschnittsweise in diese Plattenaufnahme 45.1 eingelegt. Die stoffschlüssige Verbindung zwischen der trägernahen Hartmetallplatte 42.1 und der Grundplatte 41 sowie der Plattenaufnahme 45.1 innerhalb der Übergangsstruktur 45 erfolgt dabei vorzugsweise durch Löten. Durch die Anordnung ist es möglich, dass die trägernahe Hartmetallplatte 42.1 bis unmittelbar an die Seitenoberfläche 12.1 des Trägerelements 12 geführt ist. Dadurch kann ein erhöhter Verschleiß im trägernahen Bereich der Flügelschar 40 vermieden werden.

Die Flügelschar 40 ist in einem vorgegebenen Anstellwinkel zu der Grundfläche 11.1 ausgerichtet.

Zur Montage des Werkzeugsystems 10 wird das Leitelement 20 an das Trägerelement 12 angeschraubt. Anschließend wird die Scharspitze 30.1 an dem Trägerelement 12 montiert. Dabei ist die Scharspitze 30.1 so ausgerichtet, dass sie mit ihrer Überdeckung 34 dass ihr zugewandte Ende des Leitelementes 20 in Arbeitsrichtung A überdeckt. Nachfolgend werden die spiegelsymmetrisch aufgebauten Flügelscharen 40 jeweils rechts und links des Trägerelementes 12 positioniert und mit durchgängigen Befestigungselementen 14 gemeinsam an diesem befestigt.

Wie aus der Seitenansicht zu erkennen, ist in der hier dargestellten Ausführungsform der entgegengesetzt zur Arbeitsrichtung A und in Fließrichtung des Bodenmaterials angerordnete Endpunkt 37.1 des Hartstoffelementes 37 in horizontaler Ebene über der Kante 43 der Flügelschar 40 angeordnet. Dadurch kann die Kante 43 der Flügelschar 40 aus der Sicht einer horizontalen Projektion auf das Werkzeugsystem 10 vor Abrasion durch Bodenmaterial geschützt werden.

Wie aus den Figuren 1 und 2 zu erkennen ist, steht das Basisteil 31 quer zur Arbeitsrichtung A weiter gegenüber dem Trägerelement 12 über als die Befestigungslaschen 44 der montierten Flügelelemente 40. In Richtung der Längserstreckung des Trägerelementes 12 schließt die Befestigungslasche 44 in etwa mit dem Basisteil 31 der Scharspitze 30.1 ab. Das Basisteil 31 schirmt somit die in Arbeitsrichtung A weisende Stirnfläche der Befestigungslasche 44 gegenüber dem Materialfluss abgetragenen Erdreiches zumindest weitestgehend ab. Wie insbesondere aus Figur 1 zu entnehmen ist, überdeckt das Basisteil 31 quer zur Arbeitsrichtung A auch die Befestigungselemente 14, mit denen die Flügelscharen 40 an dem Trägerelement 12 montiert sind. Dadurch kann ein vorzeitiger Verschleiß der Befestigungslasche 44 sowie der Befestigungselemente 14 vermieden werden. Werkzeugansätze bzw. Werkzeugeingriffe der Befestigungselemente 14 bleiben auch nach langem Einsatz des Werkzeugsystems 10 erhalten. Ein geeignetes Werkzeug kann so problemlos an einem Werkzeugansatz bzw. Werkzeugeingriff angesetzt und das Befestigungselement 14 gelöst werden.

Im gezeigten Ausführungsbeispiel sind die Hartstoffelemente 37 einteilig ausgeführt. Ist beispielsweise der Abstand 60 zwischen der Grundfläche 11.1 und der Kante 43 größer gewählt als in dem gezeigten Ausführungsbeispiel angedeutet, kann es sinnvoll sein, die Hartstoffelemente 37 mehrteilig auszuführen, um die Bereiche zwischen den äußeren Schneidelementen 36.1 und der Position der Hartmetallplatten 42 zu überbrücken. Mit einem mehrteiligen Hartstoffelement 37 ist es weiterhin möglich, einer gebogenen Form des Basisteils 31, wie diese in Figur 2 zu erkennen ist, zu folgen.

Entsprechend einer weiteren, nicht dargestellten Ausführungsform der Erfindung kann es vorgesehen sein, zumindest die äußeren Schneidelemente 36.1 und die zugeordneten Hartstoffelemente 37 einteilig auszuführen. Dadurch können die Herstellkosten gegenüber einer Einzelfertigung reduziert werden.

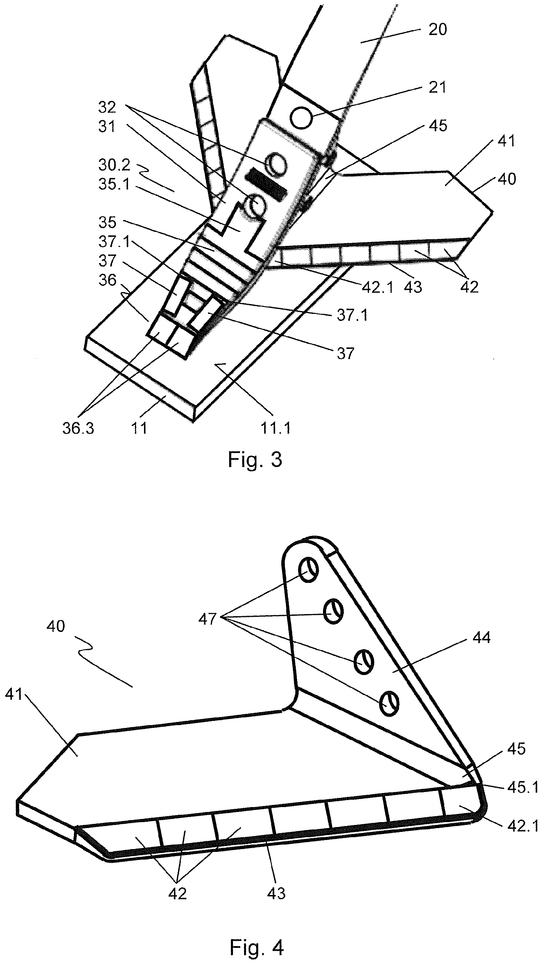

Figur 3 zeigt die Darstellung einer weiteren Ausführungsform eines Werkzeugsystems 10 in einer perspektivischen Darstellung mit einer zweiten Scharspitze 30.2. In ihrer Funktion gleiche Bauteile wie zu Figur 1 und 2 eingeführt sind dabei gleich bezeichnet.

Die Schneide 36 der zweiten Scharspitze ist durch 2 aneinandergrenzte Schneidelemente 36.3 gebildet. Die Schneide 36 ist somit nicht stufig ausgebildet. An die Schneidelemente 36.3 schließen sich Hartstoffelemente 37 an. Die Hartstoffelemente 37 können, wie im gezeigten Ausführungsbeispiel, einstückig, aber auch mehrstückig ausgeführt sein. Sie können weiterhin auch einstückig mit den zugeordneten Schneidelementen 36.3 verbunden sein. Ausgehend von ihren den Schneidelementen 36.3 zugewandten Enden sind die Hartstoffelemente 37 in ihrem weiteren Verlauf leicht nach außen hin ausgerichtet. Damit folgen die Hartstoffelemente 37 mit ihren Außenkanten den Außenkanten des Basisteils 31. Das Basisteil 31 weist quer zum Materialfluss verlaufende, stufenförmige Ableitflächen 35 auf. Diese gehen in einen Vorsprung 35.1 über. Der Vorsprung 35.1 endet unmittelbar an der in Arbeitsrichtung A vorne liegenden Ausnehmung 32 des Basisteils 31. Vorbeigleitendes Erdreich wird so durch den Vorsprung 35.1 an der Ausnehmung 32 und dem darin angeordneten Befestigungselement vorbeigeleitet.

Weiterhin setzt sich Erdreich in den Stufen der Ableitflächen 35 fest und verhindert bzw. vermindert so einen direkten Kontakt des vorbeigleitenden Erdreiches mit dem Basisteil 31. Dadurch kann der Verschleiß des Basisteils reduziert werden.

Dem Leitelement 20 zugewandt endet das Basisteil 31 durch eine geradlinig abgeschlossene Überdeckung 34. Das Leitelement 20 ist mit seinem dem Basisteil 31 zugewandten Ende hinter die Überdeckung 34 geführt und von dieser gehalten. Weiterhin ist das Leitelement 20 durch nicht dargestellte Befestigungselemente, welche in die erste Bohrung 21 eingeführt sind, mit dem Trägerelement 12 verbunden. Die Überdeckung 34 schützt das Ende des Leitelements 20 vor erhöhtem Verschleiß.

Auch in dem in Figur 3 gezeigten Ausführungsbeispiel sind die Hartstoffelemente 37 so angeordnet, dass sie in ihrer der Arbeitsrichtung A entgegenlaufenden Projektion zumindest einen Teil der trägernahen Hartmetallplatten 42.1 und dabei insbesondere deren Kanten 43 abdecken. Die Länge der Hartstoffelemente 37 ist der beanspruchten Überdeckung der trägernahen Kanten 43 der Flügelscharen 40 angepasst. Dadurch werden, wie zu den Figuren 1 und 2 beschrieben, die trägernahen Bereiche der Flügelscharen 40 vor dem Materialfluss des vorbeigleitenden Erdreiches abgeschirmt. Die Standzeit der Flügelscharen 40 kann dadurch deutlich verlängert werden.

Figur 4 zeigt die Darstellung einer erfindungsgemäßen Flügelschar 40 in einer perspektivischen Ansicht.

Die Kante 43 der Flügelschar 40 ist durch aneinandergereihte Hartmetallplatten 42 gebildet. Die Grundplatte 41 ist über eine kehlig ausgebildete Übergangskontur 45 mit der Befestigungslasche 44 verbunden. Die Befestigungslasche 44 ist in einem Winkel von vorzugsweise 90° gegenüber der Grundplatte 41 ausgerichtet. Die Befestigungslasche ist von vier Montageaufnahmen 47 durchbrochen. Die Montageaufnahmen 47 dienen der Befestigung der Führungsschar 40, vorzugsweise mit geeigneten Schrauben, an dem Trägerelement 12.

Die trägernahe Hartmetallplatte 42.1 ist bis in den Bereich der Befestigungslasche 44 geführt. Damit grenzt die trägernahe Hartmetallplatte 42.1 im montierten Zustand unmittelbar an die Seitenoberfläche 12.1 des Trägerelements 12. Im Bereich der Übergangskontur 45 ist die Plattenaufnahme 45.1 eingearbeitet, in welche die trägernahe Hartmetallplatte 42.1 eingelötet ist.

Durch die gezeigte Anordnung ist die durch Hartmetall gebildete vordere Kante 43 der Flügelschar 40 in den Übergangsbereich 45 und bis unmittelbar an das Trägerelement 12 geführt. Dadurch kann der Verschleiß im Übergangsbereich 45 gegenüber einer bekannten Anordnung, bei der die Hartmetallbestückung beabstandet von dem Übergangsbereich 45 endet, deutlich verbessert werden. Vorteilhaft ist dieser Bereich bei montiertem Werkzeugsystem 10, wie zu den Figuren 1 bis 3 beschrieben, zusätzlich von dem in Arbeitsrichtung A davorliegend angeordneten Hartstoffelement 37 abgeschirmt. Der bezüglich Verschleiß besonders anfällig Übergangsbereich von der Grundplatte 41 zu der Befestigungslasche 44 ist somit bestmöglich geschützt.

Figur 5 zeigt die Darstellung einer weiteren erfindungsgemäßen Flügelschar 40 mit einstellbarem Anstellwinkel in einer perspektivischen Darstellung. Wie bereits zu Figur 2 beschrieben weist die hier dargestellte Flügelschar 40 eine Grundplatte 41, eine damit über einen Übergangsbereich 45 verbundene und winklig angeordnete Befestigungslasche 44 sowie einen Führungsabschnitt 46 auf. Die trägernahe Hartmetallplatte 42.1 ist teilweise in eine im Bereich der Übergangskontur 45 eingebrachte Plattenaufnahme 45.1 eingelegt und verlötet. Sie läuft an ihrem der Befestigungslasche 44 zugewandten Ende spitz zu. Damit deckt sie die Übergangskontur 45 bis in den Bereich der Befestigungslasche 44 ab und wirkt dadurch in diesem Bereich verschleißhemmend.

Die Befestigungslasche 44 ist von einer Montageaufnahme 47 und von einer mehrstufigen Montageaufnahme 47.1 durchsetzt. Die Montageaufnahme 47 ist als quadratischer Durchbruch ausgeführt. In dem Durchbruch kann ein Vierkantansatz einer nicht gezeigten Schlossschraube festgelegt werden. Die Schlossschraube dient der Befestigung der Befestigungslasche 44 an dem Trägerelement 12. Die mehrstufige Montageaufnahme 47.1 ist im vorliegenden Ausführungsbeispiel durch drei sich überlagernd angeordnete, quadratische Durchbrüche gebildet. Der Vierkantansatz einer zu Montage vorgesehenen Schlossschraube kann so in drei unterschiedlichen Positionen in der mehrstufigen Montageaufnahme 47.1 festgelegt werden. Dadurch kann die Flügelschar 40, gedreht um die Montageaufnahme 47, in drei Anstellwinkeln mit dem Trägerelement 12 verbunden werden.

Durch die mehrstufige Montageaufnahme 47.1 kann der Anstellwinkel der Flügelschar 40 an die jeweilige Arbeitssituation angepasst werden. Abweichend zu der dargestellten Ausführungsvariante können auch mehrstufige Montageaufnahmen 47.1 vorgesehen sein, die lediglich zwei Einstellung oder mehr als drei Einstellung erlauben. Ebenfalls sind Einstellvorrichtungen denkbar, welche eine kontinuierliche Einstellung des Anstellwinkels erlauben. Vorteilhaft ist das in den Figuren 1 bis 3 gezeigte Hartstoffelement 37 so dimensioniert und angeordnet, dass es in Projektion entgegengesetzt zur Arbeitsrichtung A die Kante 43 und zumindest einen Teil der trägernahen Hartmetallplatte 42.1 in allen möglichen Einstellungen des Anstellwinkels abdeckt.

Figur 6 zeigt die Darstellung einer weiteren Flügelschar 40 mit Führungsstegen 48 in einer perspektivischen Ansicht.

Ausgehend von einer Flügelschar 40, wie sie in Figur 5 dargestellt ist, sind bei der in Figur 6 gezeigten Ausführungsvariante drei Führungsstege 48 auf der der Grundfläche 11.1 des zu bearbeitenden Grundes 11 abgewandten Seite der Grundplatte 41 angeordnet. Die plattenförmigen Führungsstege 48 weisen eine in etwa dreieckige Kontur auf. Sie sind beabstandet auf der Oberseite der Grundplatte 41 angeordnet und an dieser befestigt, vorzugsweise mit dieser verschweißt. Die schmalen Seiten der Führungsstege 48 sind in Arbeitsrichtung A ausgerichtet.

Die Führungsstege 48 bewirken zusätzlich zu dem Führungsabschnitt 46 eine seitliche Führung des Werkzeugsystems 10 im landwirtschaftlichen Einsatz.

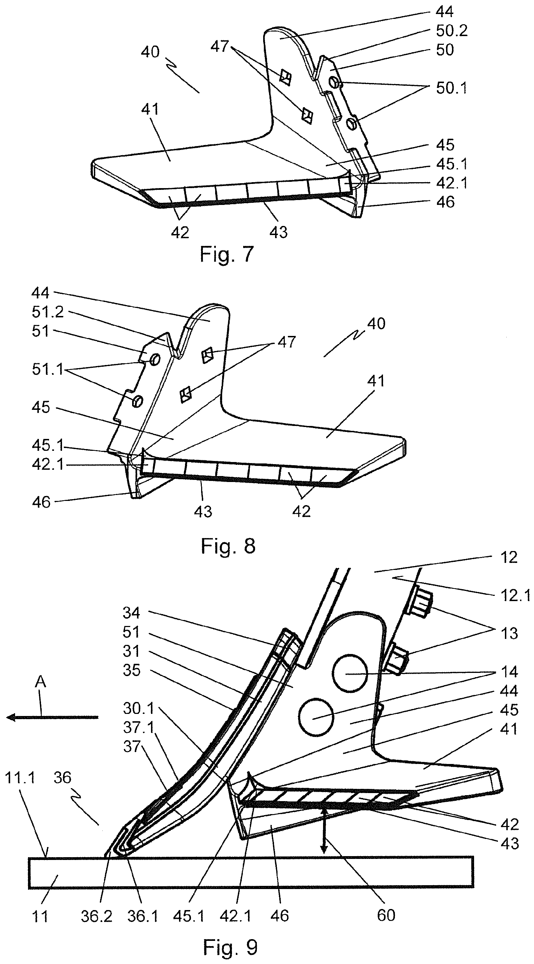

Figur 7 zeigt die Darstellung einer Flügelschar 40 mit einer inneren Anschlagslasche 50 in einer perspektivischen Ansicht. Dabei handelt es sich im gezeigten Ausführungsbeispiel um die in Arbeitsrichtung A rechte Flügelschar 40.

Die innere Anschlagslasche 50 ist mit der Befestigungslasche 44 winklig, vorzugsweise rechtwinklig verbunden. Die innere Anschlagslasche 50 kann dazu einstückig an die Befestigungslasche 44 angeformt oder stoffschlüssig mit dieser verbunden sein. Die innere Anschlagslasche 50 ist mit der bei montiertem Werkzeugsystem 10 dem Basisteil 31 der Scharspitze 30.1, 30.2 zugewandten Stirnfläche der Befestigungslasche 44 verbunden. Sie ist zu der der Grundplatte 41 abgewandten Seite der Befestigungslasche 44 hin ausgerichtet. In die innere Anschlagslasche 50 sind zwei innere Befestigungsbohrungen 50.1 eingebracht. In Montageposition nach oben hin ist die innere Anschlagslasche 50 durch einen dreieckig ausgebildeten, inneren Anschlussbereich 50.2 abgeschlossen.

Figur 8 zeigt die Darstellung einer Flügelschar 40 mit einer äußeren Anschlagslasche 51 in einer perspektivischen Ansicht. Bei der Flügelschar 40 handelt es sich dabei um die in Arbeitsrichtung A linke Flügelschar 40.

Die äußere Anschlagslasche 51 ist analog der zu Figur 7 beschriebenen inneren Anschlaglasche 50 mit der Befestigungslasche 44 verbunden. Auch sie weist zwei äußere Befestigungsbohrungen 51.1 sowie einen äußeren Anschlussbereich 51.2 auf. Die äußere Anschlagslasche 51 ist gegenüber der inneren Anschlagslasche 50 geringfügig weiter gegenüber der zugehörigen Befestigungslasche 44 beabstandet.

Figur 9 zeigt die Darstellung eines Werkzeugsystems 10 mit den in Figur 7 und 8 gezeigten Flügelscharen 40 in einer seitlichen Ansicht.

Die Flügelscharen 40 sind an den gegenüberliegenden Seitenoberflächen 12.1 des Trägerelements 12 angeordnet und mittels der Befestigungselemente 14 an diesem befestigt. Dabei umgreifen die innere und die äußere Anschlagslasche 50, 51 das Trägerelement 12 in Arbeitsrichtung A. Die innere und die äußere Anschlagslasche 50, 51 liegen in der Montageposition übereinander. Dabei ist die innere Anschlagslasche 50 dem Trägerelement 12 und die äußere Anschlagslasche 51 dem Basisteil 31 der Scharspitze 30.1 zugewandt.

Verdeckt angeordnete Montageschrauben sind durch die in Figur 1 gezeigten Ausnehmungen 32, 33 in dem Basisteil 31 sowie durch die inneren und äußeren Befestigungsbohrungen 50.1, 51.1 der Anschlagslaschen 50, 51 geführt. Damit sind sowohl die Scharspitze 30.1 als auch die Flügelscharen 40 mit Hilfe der Montageschrauben an dem Trägerelement 12 befestigt.

Die Anordnung ist derart gewählt, dass die Kanten 43 der Flügelscharen 40 in ihren trägernahen Bereichen und in Arbeitsrichtung A von den Hartstoff Elementen abgedeckt sind. Weiterhin sind die Anschlagslasche 50, 51 von dem Basisteil 31 abgedeckt und somit vor Verschleiß geschützt.

Die Anschlagslasche 50, 51 ermöglichen eine exakte gegenseitige Positionierung der Flügelscharen 40 untereinander sowie gegenüber dem Trägerelement 12 und der Scharspitze 30.1. Durch die zusätzliche Befestigungsmöglichkeit an dem Trägerelement 12 kann ein Verlust der Flügelscharen 40 sicher verhindert werden.

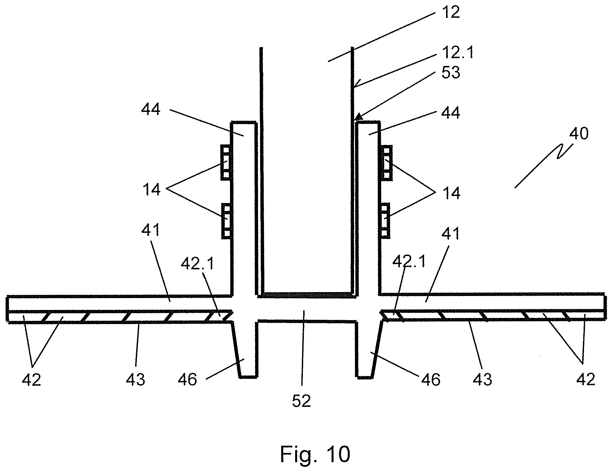

Figur 10 zeigt zwei einteilig miteinander verbundene Flügelscharen 40 in einer Ansicht von vorne.

Die Flügelscharen 40 sind durch einen in Verlängerung der Grundplatten 41 angeordneten Verbindungssteg 52 miteinander verbunden. Der Verbindungssteg 52 bildet, zusammen mit den gegenüberliegend angeordneten Befestigungslaschen 44, eine Tasche 53 aus. Das Trägerelement 12 ist in diese Tasche 53 bis zum Verbindungssteg 52 hin eingeführt und in dieser Position mittels der Befestigungselemente 14 mit den Flügelscharen 40 verbunden.

Auch bei dieser Anordnung sind die trägernahen Hartmetallplatten 42.1 bis in den Bereich der Befestigungslaschen 44 geführt. Sie werden so zumindest teilweise von einem in Arbeitsrichtung A davor angeordneten Hartstoffelement 37 gegenüber dem abgetragenen Erdreich abgeschirmt.

Durch die Verbindung der Flügelscharen 40 wird ein mechanisch stark belastbarer und verwindungssteifer Aufbau des Werkzeugsystems 10 erreicht.

## Patentansprüche

1. Werkzeugsystem (10) für eine landwirtschaftliche Bodenbearbeitungsmaschine mit einem Basisteil (31), das mittels einer lösbaren Verbindung mit einem Trägerelement (12), insbesondere mit einem Zinken der landwirtschaftlichen Bodenbearbeitungsmaschine, in Verbindung steht, wobei das Basisteil (31) eine Schneide (36) und angrenzend an die Schneide (36) wenigstens ein Hartstoffelement (37) aufweist, und wobei das Trägerelement (12) in seinem in Arbeitsrichtung (A) weisenden Endbereich seitlich angeordnete, mit Hartmetallplatten (42, 42.1) bestückte Flügelscharen (40) aufweist,
**dadurch gekennzeichnet, dass** die mit Hartmetallplatten (42, 42.1) bestückte Kante (43) der Flügelschar (40) bis an eine Seitenoberfläche (12.1) des Trägerelementes (12) geführt ist.

2. Werkzeugsystem (10) für eine landwirtschaftliche Bodenbearbeitungsmaschine mit einem Basisteil (31), wobei das Basisteil (31) mittels einer lösbaren Verbindung mit einem Trägerelement (12), insbesondere mit einem Zinken der landwirtschaftlichen Bodenbearbeitungsmaschine in Verbindung steht, wobei das Basisteil (31) eine Schneide (36) und angrenzend an die Schneide (36) wenigstens ein Hartstoffelement (37) aufweist, und wobei das Trägerelement (12) in seinem in Arbeitsrichtung (A) weisenden Endbereich seitlich angeordnete, mit Hartmetallplatten (42, 42.1) bestückte Flügelscharen (40) aufweist,
**dadurch gekennzeichnet, dass** das wenigstens eine an die Schneide (36) angrenzende Hartstoffelement (37) die im trägernahen Bereich angeordneten Hartmetallplatten (42, 42.1) der Flügelschar (40) quer zur Arbeitsrichtung (A) wenigstens teilweise überdeckt.

3. Werkzeugsystem (10) nach Anspruch 1 oder 2,
**dadurch gekennzeichnet,**
**dass** ein Anstellwinkel der Flügelschar (40) in einem vorgegebenen Bereich in Stufen oder stufenlos gegenüber dem Trägerelement (12) einstellbar ist und dass das wenigstens eine an die Schneide (36) angrenzende Hartstoffelement (37) in allen einstellbaren Anstellwinkeln der Flügelschar (40) die im trägernahen Bereich angeordneten Hartmetallplatten (42, 42.1) der Flügelschar (40) quer zur Arbeitsrichtung (A) zumindest teilweise überdeckt.

4. Werkzeugsystem (10) nach einem der Ansprüche 1 bis 3,
**dadurch gekennzeichnet,**
**dass** ein Abstand (60) zwischen der mit Hartmetallplatten (42, 42.1) bestückten Kante (43) der Flügelschar (40) und einer Grundfläche (11.1) des zu bearbeitenden Grundes (11) im Vergleich zu einem Abstand zwischen einem in Fließrichtung des Bodenmaterials liegenden Endpunkt (37.1) des wenigstens einen Hartstoffelementes (37) und der Grundfläche (11.1) kleiner ist.

5. Werkzeugsystem (10) nach einem der Ansprüche 1 bis 4,
**dadurch gekennzeichnet,**
**dass** die Länge des an der Schneide (36) angrenzenden, wenigstens einen Hartstoffelements (37) in Fließrichtung des Bodenmaterials einer horizontalen Lage der mit Hartstoffplatten (42, 42.1) bestückten Flügelschar (40) angepasst ist.

6. Werkzeugsystem (10) nach einem der Ansprüche 1 bis 5,
**dadurch gekennzeichnet,**
**dass** das an der Schneide (36) angrenzende Hartstoffelement (37) einteilig oder mehrteilig ausgebildet ist.

7. Werkzeugsystem (10) nach einem der Ansprüche 1 bis 6,
**dadurch gekennzeichnet,**
**dass** das Hartstoffelement (37) einteilig mit einem die Schneide (36) bildenden Schneidelement (36.1, 36.2, 36.3) verbunden ist.

8. Werkzeugsystem (10) nach einem der Ansprüche 1 bis 7,
**dadurch gekennzeichnet,**
**dass** der Abstand der im trägernahen Bereich angeordneten Hartmetallplatte (42, 42.1) der Flügelschar (40) zu einer Ebene, welche eine der Flügelschar (40) zugewandte Seitenoberfläche (12.1) des Trägerelementes (12) enthält, kleiner ist als der Abstand der quer zur Arbeitsrichtung äußeren Abmessungsbegrenzung des Hartstoffelementes (37) zu der Ebene.

9. Werkzeugsystem (10) nach einem der Ansprüche bis 1 bis 8,
**dadurch gekennzeichnet,**
**dass** die Projektion des Hartstoffelementes (37) entgegengesetzt zur Arbeitsrichtung (A) in eine die Kante (43) enthaltende Ebene (E) eine größere Länge senkrecht zur Arbeitsrichtung (A) aufweist als die Erstreckung der Hartstoffplatten (42, 42.1) in dieser Richtung.

10. Werkzeugsystem (10) nach einem der Ansprüche 1 bis 9,
**dadurch gekennzeichnet,**
**dass** die Projektion der äußeren Abmessungsbegrenzung des Hartstoffelementes (37) entgegengesetzt zur Arbeitsrichtung (A) in eine die Kante (43) enthaltende Ebene (E) eine größere Länge aufweist als die Erstreckung der Hartstoffplatten (42, 42.1) in diese Richtung.

11. Werkzeugsystem (10) nach einem der Ansprüche 1 bis 10,
**dadurch gekennzeichnet,**
**dass** die Schneide (36) gestuft ausgeführt ist, wobei der mittlere Bereich der Schneide (36) gegenüber dem äußeren Bereich der Schneide (36) hervorsteht.

12. Werkzeugsystem (10) nach einem der Ansprüche 1 bis 11,
**dadurch gekennzeichnet,**
**dass** zwischen benachbarten Hartmetallplatten (42, 42.1) ausgebildete Stoßkanten schräg zu einer vertikal zur Grundfläche (11.1) und in Arbeitsrichtung (A) verlaufenden Fläche ausgerichtet sind.

13. Werkzeugsystem (10) nach einem der Ansprüche 1 bis 12,
**dadurch gekennzeichnet,**
**dass** zwei gegenüberliegend an dem Trägerelement (12) angeordnete Flügelscharen (40) einstückig miteinander verbunden sind.

14. Werkzeugsystem (10) nach einem der Ansprühe 1 bis 13
**dadurch gekennzeichnet,**
**dass** das Basisteil (31) eine Befestigungslasche (44) der Flügelschar (40) und/oder Befestigungselemente (14) der Flügelschar (40) zur Befestigung der Befestigungslasche (44) an dem Trägerelement (12) quer zur Arbeitsrichtung (A) wenigstens teilweise überdeckt.

15. Flügelschar (40) für ein Werkzeugsystem (10) eines landwirtschaftlichen Bodenbearbeitungswerkzeuges mit einer Grundplatte (41) und einer dazu im Winkel stehenden Befestigungslasche (44), wobei die Grundplatte (41) Hartmetallplatten (42, 42.1) aufweist, die eine Kante (43) bilden,
**dadurch gekennzeichnet,**
**dass** die Kante (43) bis in den Bereich der Befestigungslasche (44) und/oder bis in den Bereich einer zwischen der Befestigungslasche (44) und der Grundplatte (41) gebildeten Übergangskontur (45) geführt ist.

16. Flügelschar (40) nach Anspruch 15 **dadurch gekennzeichnet,**
**dass** die Befestigungslasche (44) Montageelemente und/oder Montageaufnahmen (47, 47.1) zur Befestigung der Flügelschar (40) an einem Trägerelement (12) einer landwirtschaftlichen Maschine aufweist und dass die Montageelemente und/oder Montageaufnahmen (47, 47.1) derart ausgelegt sind, dass die Flügelschar (40) in unterschiedlichen Anstellwinkeln mit dem Trägerelement (12) verbindbar ist.

## Claims

1. A tool system (10) for an agricultural tillage machine with a base part (31) which is connected by means of a releasable connection with a support element (12), in particular with a tine of the agricultural tillage machine, the base part (31) comprising a cutting edge (36) and, adjoining the cutting edge (36), at least one hard material element (37), and the support element (12) comprising wing shares (40) which are arranged in the end region thereof pointing in the working direction (A) and are equipped with hard metal plates (42, 42.1),
**characterized in that** the edge (43), equipped with hard metal plates (42, 42.1), of the wing share (40) is guided up to a lateral surface (12.1) of the support element (12).

2. A tool system (10) for an agricultural tillage machine with a base part (31), the base part (31) being connected by means of a releasable connection with a support element (12), in particular with a tine of the agricultural tillage machine, the base part (31) comprising a cutting edge (36) and, adjoining the cutting edge (36), at least one hard material element (37), and the support element (12) comprising wing shares (40) which are arranged in the end region thereof pointing in the working direction (A) and are equipped with hard metal plates (42, 42.1),
**characterized in that** the at least one hard material element (37) adjoining the cutting edge (36) at least partly overlaps, transversely of the working direction (A), the hard metal plates (42, 42.1) of the wing share (40) arranged in the region close to the support.

3. The tool system (10) according to claim 1 or 2,
**characterized in that**
an angle of attack of the wing share (40) is adjustable stepwise or continuously over a given range relative to the support element (12) and **in that**, at all the adjustable angles of attack of the wing share (40), the at least one hard material element (37) adjoining the cutting edge (36) at least partly overlaps, transversely of the working direction (A), the hard metal plates (42, 42.1) of the wing share (40) arranged in the region close to the support.

4. The tool system (10) according to one of claims 1 to 3,
**characterized in that**
a distance (60) between the edge (43), equipped with hard metal plates (42, 42.1), of the wing share (40) and a surface (11.1) of the ground to be tilled (11) is smaller than a distance between an end point (37.1), in the flow direction of the soil, of the at least one hard material element (37) and the surface (11.1) of the ground.

5. The tool system (10) according to one of claims 1 to 4,
**characterized in that**
the length of the at least one hard material element (37) adjoining the cutting edge (36) in the flow direction of the soil is adapted to a horizontal position of the wing share (40) equipped with hard material plates (42, 42.1).

6. The tool system (10) according to one of claims 1 to 5,
**characterized in that**
the hard material element (37) adjoining the cutting edge (36) is of one-part or multipart construction.

7. The tool system (10) according to one of claims 1 to 6,
**characterized in that**
the hard material element (37) is connected in one piece with a cutting element (36.1, 36.2, 36.3) forming the cutting edge (36).

8. The tool system (10) according to one of claims 1 to 7,
**characterized in that**
the distance between the hard metal plate (42, 42.1), arranged in the region close to the support, of the wing share (40) and a plane which contains a lateral surface (12.1) of the support element (12) facing the wing share (40) is smaller than the distance between the outer dimension limit, transversely of the working direction, of the hard material element (37) and the plane.

9. The tool system (10) according to one of claims 1 to 8,
**characterized in that**
the projection of the hard material element (37) in the opposite direction to the working direction (A) into a plane (E) containing the edge (43) has a greater length perpendicular to the working direction (A) than the extent of the hard material plates (42, 42.1) in this direction.

10. The tool system (10) according to one of claims 1 to 9,
**characterized in that**
the projection of the outer dimension limit of the hard material element (37) in the opposite direction to the working direction (A) into a plane (E) containing the edge (43) has a greater length than the extent of the hard material plates (42, 42.1) in this direction.

11. The tool system (10) according to one of claims 1 to 10,
**characterized in that**
the cutting edge (36) is of stepped construction, wherein the central region of the cutting edge (36) projects relative to the outer region of the cutting edge (36).

12. The tool system (10) according to one of claims 1 to 11,
**characterized in that**
abutment edges formed between adjacent hard metal plates (42, 42.1) are oriented obliquely relative to a surface extending vertically relative to the surface (11.1) of the ground and in the working direction (A).

13. The tool system (10) according to one of claims 1 to 12,
**characterized in that**
two wing shares (40) arranged opposite one another on the support element (12) are joined together in one piece.

14. The tool system (10) according to one of claims 1 to 13,
**characterized in that**
the base part (31) at least partly overlaps, transversely of the working direction (A), a fastening lug (44) of the wing share (40) and/or fastening elements (14) of the wing share (40) for fastening the fastening lug (44) to the support element (12).

15. A wing share (40) for a tool system (10) for an agricultural tillage tool with a base plate (41) and a fastening lug (44) at an angle thereto, the base plate (41) comprising hard metal plates (42, 42.1) which form an edge (43),
**characterized in that**
the edge (43) is guided as far as into the region of the fastening lug (44) and/or as far as into the region of a transitional contour (45) formed between the fastening lug (44) and the base plate (41).

16. The wing share (40) according to claim 15,
**characterized in that**
the fastening lug (44) comprises mounting elements and/or mounting receptacles (47, 47.1) for fastening the wing share (40) to a support element (12) of an agricultural machine and **in that** the mounting elements and/or mounting receptacles (47, 47.1) are designed in such a way that the wing share (40) may be connected to the support element (12) at different angles of attack.

## Revendications

1. Système d'outils (10) destiné à une machine agricole de travail du sol, comprenant une partie de base (31), qui est reliée, au moyen d'une liaison réversible, à un élément de support (12), en particulier un assemblage à queue d'aronde, de la machine agricole de travail du sol, la partie de base (31) présentant une arête vive (36) et, de façon adjacente à l'arête vive (36), au moins un élément en matière dure (37) et l'élément de support (12) présentant des socs à ailettes (40) disposés latéralement dans sa zone d'extrémité tournée dans la direction de travail (A), équipés de plaques en métal dur (42, 42.1),
**caractérisé en ce que** le bord (43) du soc à ailettes (40) équipé des plaques en métal dur (42, 42.1) est guidé jusqu'à une surface latérale (12.1) de l'élément de support (12).

2. Système d'outils (10) destiné à une machine agricole de travail du sol, comprenant une partie de base (31), la partie de base (31) étant reliée, au moyen d'une liaison réversible, à un élément de support (12), en particulier un assemblage à queue d'aronde, de la machine agricole de travail du sol, la partie de base (31) présentant une arête vive (36) et, de façon adjacente à l'arête vive (36), au moins un élément en matière dure (37) et l'élément de support (12) présentant des socs à ailettes (40) disposés latéralement dans sa zone d'extrémité tournée dans la direction de travail (A), équipés de plaques en métal dur (42, 42.1),
**caractérisé en ce que** le au moins un élément en matière dure (37) adjacent à l'arête vive (36) recouvre au moins partiellement les plaques en métal dur (42, 42.1) du soc à ailettes (40) disposées dans la zone proche du support transversalement à la direction de travail (A).

3. Système d'outils (10) selon la revendication 1 ou 2,
**caractérisé en ce**
**qu'**un angle d'attaque du soc à ailettes (40) dans une zone prédéfinie est réglable par niveaux ou de manière continue par rapport à l'élément de support (12) et **en ce que** le au moins un élément en matière dure (37) adjacent à l'arête vive (36) recouvre au moins partiellement, dans tous les angles d'attaque réglable du soc à ailettes (40), les plaques en métal dur (42, 42.1) du soc à ailettes (40) disposées dans la zone proche du support transversalement à la direction de travail (A).

4. Système d'outils (10) selon une des revendications 1 à 3,
**caractérisé en ce**
**qu'**un espacement (60) entre le bord (43) équipé des plaques en métal dur (42, 42.1) du soc à ailettes (40) et une surface de sol (11.1) du sol à travailler (11), comparé à un espacement entre un point d'extrémité (37.1) disposé dans le sens d'écoulement du matériau du sol de l'au moins un élément en matière dure (37) et la surface de sol (11.1), est plus petit.

5. Système d'outils (10) selon une des revendications 1 à 4,
**caractérisé en ce**
**que** la longueur du au moins un élément en matière dure (37) adjacent à l'arête vive (36) dans le sens d'écoulement du matériau de sol est adaptée à une position horizontale du soc à ailettes (40) équipé des plaques en matière dure (42, 42.1).

6. Système d'outils (10) selon une des revendications 1 à 5,
**caractérisé en ce**
**que** l'élément en matière dure (37) adjacent à l'arête vive (36) est formé en une seule partie ou en plusieurs parties.

7. Système d'outils (10) selon une des revendications 1 à 6,
**caractérisé en ce**
**que** l'élément en matière dure (37) est relié d'un seul tenant avec un élément de coupe (36.1, 36.2, 36.3) formant l'arête vive (36).

8. Système d'outils (10) selon une des revendications 1 à 7,
**caractérisé en ce**
**que** l'espacement des plaques en métal dur (42, 42.1) du soc à ailettes (40) disposées dans la zone proche du support par rapport à un plan, qui contient une surface latérale (12.1) orientée vers le soc à ailettes (40) de l'élément de support (12), est plus petit que l'espacement de la limite des dimensions externes de l'élément en matière dure (37) transversalement à la direction de travail par rapport au plan.

9. Système d'outils (10) selon une des revendications 1 à 8,
**caractérisé en ce**
**que** la projection de l'élément en matière dure (37) opposée à la direction de travail (A) dans un plan (E) contenant le bord (43) présente une longueur supérieure perpendiculairement à la direction de travail (A) au prolongement des plaques de matière dure (42, 42.1) dans cette direction.

10. Système d'outils (10) selon une des revendications 1 à 9,
**caractérisé en ce**
**que** la projection de la limite des dimensions externes l'élément en matière dure (37) opposée à la direction de travail (A) dans un plan (E) contenant le bord (43) présente une longueur supérieure au prolongement des plaques de matière dure (42, 42.1) dans cette direction.

11. Système d'outils (10) selon une des revendications 1 à 10,
**caractérisé en ce**
**que** l'arête vive (36) est conçue étagée, la zone médiane de l'arête vive (36) faisant saillie par rapport à la zone externe de l'arête vive (36).

12. Système d'outils (10) selon une des revendications 1 à 11,
**caractérisé en ce**
**que**, entre les plaques de métal dure (42, 42.1) voisines, des bords de raccordement formés sont orientés de façon oblique par rapport à une surface s'étendant à la verticale par rapport à la surface de sol (11.1) et dans la direction de travail (A).

13. Système d'outils (10) selon une des revendications 1 à 12,
**caractérisé en ce**
**que** deux socs à ailettes (40) disposés en regard sur l'élément de support (12) sont reliés d'un seul tenant l'un à l'autre.

14. Système d'outils (10) selon une des revendications 1 à 13,
**caractérisé en ce**
**que** la partie de base (31) recouvre au moins partiellement une patte de fixation (44) du soc à ailettes (40) et/ou des éléments de fixation (14) du soc à ailettes (40) pour la fixation de la patte de fixation (44) à l'élément de support (12) transversalement à la direction de travail (A).

15. Soc à ailettes (40) pour un système d'outils (10) d'un outil agricole de travail du sol, comprenant une plaque de sol (41) et une patte de fixation (44) disposée selon un angle par rapport à celle-ci, la plaque de sol (41) présentant des plaques en métal dur (42, 42.1) qui forment un bord (43),
**caractérisé en ce**
**que** le bord (43) est guidé jusque dans la zone de la patte de fixation (44) et/ou jusque dans la zone d'un contour de transition (45) formé entre la patte de fixation (44) et la plaque de sol (41).

16. Soc à ailettes (40) selon la revendication 15,
**caractérisé en ce**
**que** la patte de fixation (44) présente des éléments de montage et/ou des logements de montage (47, 47.1) pour la fixation du soc à ailettes (40) sur un élément de support (12) d'une machine agricole et **en ce que** les éléments de montage et/ou les logements de montage (47, 47.1) sont conçus de sorte que le soc à ailettes (40) puisse être relié à l'élément de support (12) selon différents angles d'attaque.
